# EUROPÄISCHE PATENTANMELDUNG

(11) **EP 1 378 388 A1**
(43) Veröffentlichungstag der Anmeldung: **07.01.2004**
(21) Anmeldenummer: 03102005.0
(22) Anmeldetag: 04.07.2003
(51) Int. Cl.: B60J 10/00

(54) **Dichtungsanordnung, insbesondere zum Abdichten eines Spalts oder einer Fuge an einem Kraftfahrzeug**

(30) Priorität: 04.07.2002 DE 10230682
(71) Anmelder: METZELER Automotive Profiles GmbH, D-88131 Lindau (DE)
(72) Erfinder: Krause, Fritz, 88145, Hergatz (DE)
(74) Vertreter: Preissner, Nicolaus, Dipl.-Ing.

(57) **Zusammenfassung**

Eine Dichtungsanordnung zum Abdichten einer Fuge (13) an einem Kraftfahrzeug (10) weist ein erstes Bauteil (11), ein zweites Bauteil (12) und eine die Fuge (13) zwischen dem ersten Bauteil (11) und dem zweiten Bauteil (12) abdichtende Dichtung (20) auf. Die Dichtung (20) setzt sich aus einem Befestigungsabschnitt (22), der an dem ersten Bauteil (11) festlegbar ist, einem in der Fuge (13) angeordneten Dichtungsabschnitt (21) und einem Übergangsabschnitt (30) zusammen. Der Übergangsabschnitt (30) bildet einen Drehpunkt (31), um den der Befestigungsabschnitt (22) relativ zu dem Dichtungsabschnitt (21) schwenkbar ist. Das erste Bauteil (11) weist wenigstens eine erste Anlagefläche (14), die sich in einer ersten Ebene (I) erstreckt, und wenigstens eine zweite Anlagefläche (15), die sich in einer zweiten Ebene (II) erstreckt, auf, wobei die erste Ebene (I) und die zweite Ebene (II) einen Winkel (α) einschließen. Ein Teil des Befestigungsabschnitts (22) ist an der ersten Anlagefläche (14) befestigbar. Demgegenüber ist in Hinsicht auf eine einfache Anpassung der Dichtung (20) an die auf Grund der unterschiedlichen Anlageflächen (14, 15) ungleichmäßige Fuge (13) ein anderer Teil des Befestigungsabschnitts (22) zum Befestigen an der zweiten Anlagefläche (15) um den Drehpunkt (31) von der ersten Ebene (I) in die zweite Ebene (II) schwenkbar.

## Beschreibung

Die Erfindung betrifft eine Dichtungsanordnung, die insbesondere zum Abdichten eines Spalts oder einer Fuge an einem Kraftfahrzeug dient. Die Dichtungsanordnung setzt sich aus einem ersten Bauteil, einem zweiten Bauteil und einer einen Zwischenraum zwischen dem ersten Bauteil und dem zweiten Bauteil abdichtenden Dichtung zusammen. Die Dichtung weist einen Befestigungsabschnitt, der an dem ersten Bauteil festlegbar ist, und einen Dichtungsabschnitt, der in dem Zwischenraum angeordnet und mit dem Befestigungsabschnitt durch einen Übergangsabschnitt verbunden ist, auf. Der Übergangsabschnitt bildet einen Drehpunkt, um den der Befestigungsabschnitt relativ zu dem Dichtungsabschnitt schwenkbar ist.

Eine derartige Dichtungsanordnung wird in der EP 1 193 096 A1 beschrieben. Die bekannte Dichtungsanordnung weist relativ zueinander bewegbare Bauteile auf, wie beispielsweise die Karosserie und die Tür eines Kraftfahrzeugs. Ein zwischen den Bauteilen vorhandener Zwischenraum wird durch eine Dichtung abgedichtet, die sich aus dem Befestigungsabschnitt, dem Übergangsabschnitt und dem Dichtungsabschnitt zusammensetzt. Um eine zuverlässige Abdichtung zu erreichen, bildet der Übergangsabschnitt einen Drehpunkt, der ein Schwenken des Dichtungsabschnitts relativ zu dem Befestigungsabschnitt ermöglicht. Auf diese Weise läßt sich der Dichtungsabschnitt beispielsweise beim Schließen der Tür eines Kraftfahrzeugs in eine Stellung schwenken, die bei einer vergleichsweise geringen Schließkraft eine hohe Anpreßkraft des Dichtungsabschnitts an der Tür des Kraftfahrzeugs und damit eine zuverlässige Dichtwirkung sicherstellt. Für die Wirkungsweise der bekannten Dichtungsanordnung ist es demzufolge unerläßlich, daß die beiden Bauteile relativ zueinander bewegbar sind.

Im Stand der Technik sind weiterhin Dichtungen bekannt, die zum Abdichten eines Zwischenraums zwischen zwei stationären Bauteilen, wie beispielsweise dem Dach eines Kraftfahrzeugs und einem an dem Dach befestigten Spoiler, dienen. Diese Dichtungen werden üblicherweise durch Extrusion eines elastomeren Werkstoffs gefertigt. Ist der Zwischenraum zwischen den Bauteilen ungleichmäßig, so wird eine Dichtung in den Zwischenraum eingesetzt, die sich aus extrudierten Segmenten unterschiedlicher Breite zusammensetzt, wobei die einzelnen Segmente an den Fügeflächen durch Kleben oder Vulkanisieren miteinander verbunden sind. Die Herstellung einer solchen Dichtung ist kostenintensiv, da ein verhältnismäßig hoher fertigungstechnischer Aufwand erforderlich ist. Darüber hinaus läßt sich die Dichtung nicht als Massenware konfektionieren, da eine spezielle Anpassung der einzelnen Segmente an die Ausgestaltung des Zwischenraums erforderlich ist.

Der Erfindung liegt die **Aufgabe** zugrunde, eine Dichtungsanordnung der eingangs genannten Art dahingehend weiterzubilden, da sich bei kostengünstiger Fertigung eine einfache Anpassung der Dichtung an einen ungleichmäßigen Zwischenraum erzielen läßt.

Zur **Lösung** dieser Aufgabe ist bei einer Dichtungsanordnung mit den oben genannten Merkmalen in Übereinstimmung mit Anspruch 1 erfindungsgemäß vorgesehen, daß das erste Bauteil wenigstens eine erste Anlagefläche, die sich in einer ersten Ebene erstreckt, und wenigstens eine zweite Anlagefläche, die sich in einer zweiten Ebene erstreckt, aufweist. Die erste Ebene und die zweite Ebene schließen einen Winkel ein, wobei ein Teil des Befestigungsabschnitts an der ersten Anlagefläche befestigbar und ein Teil des Befestigungsabschnitts zum Befestigen an der zweiten Anlagefläche um den Drehpunkt von der ersten Ebene in die zweite Ebene schwenkbar ist.

Eine solchermaßen ausgestaltete Dichtungsanordnung macht sich die Erkenntnis zu eigen, den Befestigungsabschnitt schwenkbar an dem Dichtungsabschnitt anzuordnen, um eine Befestigung an den sich in unterschiedlichen Ebenen erstreckenden Anlageflächen des ersten Bauteils zu erreichen. Auf diese Weise ergibt sich eine einfache Anpassung der Dichtung an einen ungleichmäßigen Zwischenraum zwischen dem ersten Bauteil und dem zweiten Bauteil. Die Dichtung läßt sich in wirtschaftlicher Hinsicht kostengünstig als beispielsweise extrudierter Strang konfektionieren. Das Verbinden unterschiedlicher Segmente, um eine Dichtung gewünschter Länge zu erzeugen, wie im Stand der Technik üblich, ist somit hinfällig.

Um bei einstückiger Fertigung der Dichtung einen Teil des Befestigungsabschnitts an der ersten Anlagefläche und einen anderen Teil des Befestigungsabschnitts an der zweiten Anlagefläche zu befestigen, ist es zweckmäßig, die Dichtung an der Übergangsstelle von der ersten Anlagefläche auf die zweite Anlagefläche einzuschneiden oder mit einer Ausnehmung zu versehen. Die Dichtung kann zu diesem Zweck ein Sollbruchstelle im Bereich des Einschnitts oder der Ausnehmung aufweisen.

Die erfindungsgemäße Dichtungsanordnung ist nicht beschränkt auf ein Bauteil, das zwei Anlageflächen aufweist. Vielmehr können beliebig viele, sich in unterschiedlichen Ebenen erstreckende Anlageflächen vorhanden sein. Denn die universelle Verwendbarkeit der Dichtung wird lediglich durch den Schwenkbereich des Befestigungsabschnitts eingeschränkt.

Vorteilhafte Ausgestaltungen der erfindungsgemäßen Dichtungsanordnung stellen die Gegenstände der Ansprüche 2 bis 10 dar.

So hat es sich als vorteilhaft erwiesen, wenn der Drehpunkt in dem Schnittpunkt einer ersten Geraden mit einer zweiten Gerade liegt, wobei die erste Gerade parallel zu der ersten Ebene und die zweite Gerade parallel zu der zweiten Ebene verläuft. Der sich auf diese Weise ergebende geometrische Ort des Drehpunkts trägt zu einem einfachen Schwenken des Befestigungsabschnitts bei.

Von Vorteil ist außerdem, wenn die erste Gerade in einem vorgegebenen Abstand zu der ersten Ebene und/oder die zweite Gerade in einem vorgegebenen Abstand zu der zweiten Ebene verläuft. Durch entsprechende Wahl des Abstands der ersten Gerade zu der ersten Ebene und der zweiten Gerade zu der zweiten Ebene wird der Schwenkbereich des Befestigungsabschnitts beeinflußt. Je nach Anwendungsfall kann es zweckmäßig sein, den Drehpunkt auf diese Weise eher in den Außenbereich des Übergangsabschnitts oder in dessen Mitte zu legen. Bevorzugt beträgt der Abstand der ersten Gerade zu der ersten Ebene annähernd die Hälfte der Breite des Zwischenraums, so daß sich eine mittige Anlenkung des Befestigungsabschnitts ergibt, die einen großen Schwenkbereich sicherstellt.

In einer bevorzugten Weiterbildung der erfindungsgemäßen Dichtungsanordnung ist der Übergangsabschnitt als Einschnürung der Dichtung zwischen dem Dichtungsabschnitt und dem Befestigungsabschnitt ausgebildet. Der auf diese Weise als Filmscharnier dienende Übergangsabschnitt läßt sich einfach und kostengünstig fertigen und gewährleistet ein Schwenken des Befestigungsabschnitts mit einem verhältnismäßig geringen Kraftaufwand.

In einer alternativen Ausgestaltung der erfindungsgemäßen Dichtungsanordnung weist der Übergangsabschnitt vorteilhafterweise eine Hohlkammer auf, die mit einer Ausnehmung oder einem Einschnitt versehen ist. Der Übergangsabschnitt weist auf diese Weise einen Drehpunkt auf, der auf der dem Einschnitt oder der Ausnehmung abgewandten Seite der Hohlkammer liegt. Bevorzugt weist die Hohlkammer eine Wandung auf, die zur Bildung der Ausnehmung mit einer Abreißschnur versehen ist. Eine solche Ausgestaltung bietet den Vorteil, daß sich der Übergangsabschnitt gezielt in den Bereichen mit einer Ausnehmung versehen läßt, in denen der Befestigungsabschnitt von der ersten Ebene in die zweite Ebene zu schwenken ist. In Bereichen, in denen ein Schwenken des Befestigungsabschnitts zur Befestigung der Dichtung nicht erforderlich ist, bleibt die Wandung der Hohlkammer erhalten, so daß ein günstiger Kraftfluß von dem Befestigungsabschnitt in den Dichtungsabschnitt und damit eine hohe Stabilität der Dichtung gewährleistet ist.

Von besonderem Vorteil ist ferner, wenn der Übergangsabschnitt einen Vorsprung und eine Hinterschneidung aufweist, wobei der Vorsprung formschlüssig in der Hinterschneidung festlegbar ist. Der Formschluß zwischen Vorsprung und Hinterschneidung kann entweder in der Ausgangsstellung oder in der verschwenkten Stellung des Befestigungsabschnitts vorgesehen werden. Greift der Vorsprung in der Ausgangsstellung des Befestigungsabschnitts in die Hinterschneidung ein, so verfügt die Dichtung über eine vergleichsweise hohe Formstabilität, die eine praxisgerechte Handhabung und einfache Montage sicherstellt. Zum Schwenken des Befestigungsabschnitts ist es in diesem Fall erforderlich, den Formschluß zu lösen. Rastet hingegen der Vorsprung in der verschwenkten Stellung des Befestigungsabschnitts in der Hinterschneidung ein, so ergibt sich eine zusätzliche Befestigung des Befestigungsabschnitts an dem Übergangsabschnitt, die zu einer hohen Stabilität der Dichtung beiträgt.

In Hinsicht auf eine einfache Montage ist es von Vorteil, den Befestigungsabschnitt durch Kleben an der ersten Anlagefläche und/oder der zweiten Anlagefläche zu befestigen. Schließlich wird in Weiterbildung der erfindungsgemäßen Dichtungsanordnung vorgeschlagen, daß die Dichtung aus einem elastisch verformbaren Werkstoff, vorzugsweise einem thermoplastischen Elastomer (TPE) oder Ethylen-Propylen-Dien-Kautschuk (EPDM), extrudiert ist, um eine einfache und in wirtschaftlicher Hinsicht günstige Fertigung der Dichtung als Massenware zu ermöglichen.

Einzelheiten und weitere Vorteile der erfindungsgemäßen Dichtungsanordnung ergeben sich aus der nachfolgenden Beschreibung bevorzugter Ausführungsbeispiele. In den die Ausführungsbeispiele lediglich schematisch darstellenden Zeichnungen veranschaulichen im einzelnen:
- Fig. 1: eine perspektivische Ansicht der Karosserie eines Kraftfahrzeugs;
- Fig. 2: eine Seitenansicht der Karosserie gemäß Fig. 1 mit einem an dem Dach des Kraftfahrzeugs angeordneten Spoiler;
- Fig. 3: einen Querschnitt durch eine Dichtung, die eine Fuge zwischen dem Dach und dem Spoiler des Kraftfahrzeugs gemäß Fig. 2 abdichtet;
- Fig. 4A: einen Querschnitt gemäß Fig. 3, der eine erste Ausführungsform der Dichtung in einer verschwenkten Stellung zeigt;
- Fig. 4B: einen Querschnitt gemäß Fig. 4A, der die Dichtung in einer Ausgangsstellung zeigt;
- Fig. 5: einen Querschnitt gemäß Fig. 3, der eine zweite Ausführungsform der Dichtung zeigt;
- Fig. 6: einen Querschnitt gemäß Fig. 3, der eine dritte Ausführungsform der Dichtung zeigt;
- Fig. 7: einen Querschnitt gemäß Fig. 3, der eine vierte Ausführungsform der Dichtung zeigt;
- Fig. 8: einen Querschnitt gemäß Fig. 3, der eine fünfte Ausführungsform der Dichtung zeigt;
- Fig. 9A: eine Darstellung einer Dichtung im extrudierten Zustand;
- Fig. 9B: eine Darstellung der Dichtung gemäß Fig. 9A im verschwenkten Zustand;
- Fig. 10A: eine Darstellung einer Dichtung im verschwenkten Zustand;
- Fig. 10B: eine Darstellung der Dichtung gemäß Fig. 10A im extrudierten Zustand;
- Fig. 11A: eine Darstellung einer Dichtung im extrudierten Zustand;
- Fig. 11B: eine Darstellung der Dichtung gemäß Fig. 11A im verschwenkten Zustand.
- Fig. 12A: eine Darstellung einer Dichtung im verschwenkten Zustand;
- Fig. 12B: eine Darstellung der Dichtung gemäß Fig. 12A im extrudierten Zustand;
- Fig. 13A: eine Darstellung einer Dichtung im verschwenkten Zustand;
- Fig. 13B: eine Darstellung der Dichtung gemäß der Fig. 13A im extrudierten Zustand;
- Fig. 14A: eine Darstellung einer Dichtung im extrudierten Zustand;
- Fig. 14B: eine Darstellung der Dichtung gemäß Fig. 14A im verschwenkten Zustand;
- Fig. 15A: eine Darstellung einer Dichtung im verschwenkten Zustand und
- Fig. 15B: eine Darstellung der Dichtung gemäß Fig. 15A im extrudierten Zustand.

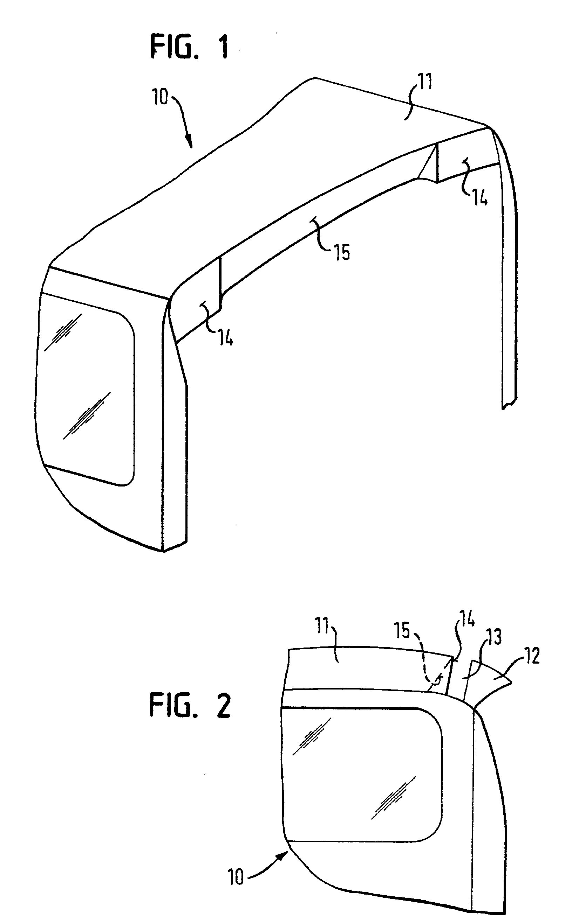

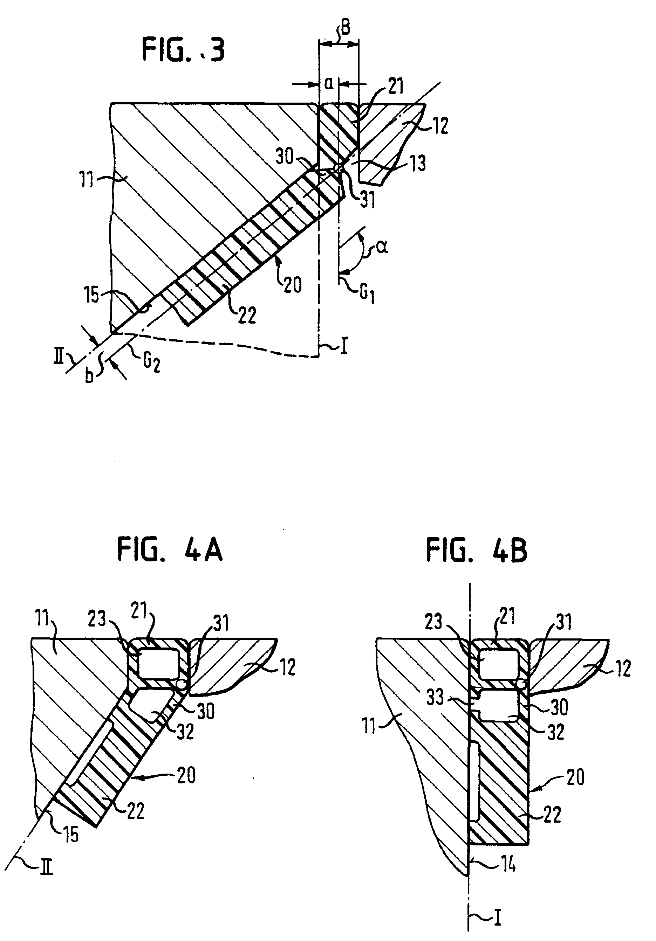

In den Fig. 1 und 2 ist das Heck der Karosserie eines Kraftfahrzeugs 10 dargestellt. Das Kraftfahrzeug 10 weist ein Dach 11 auf, an dem ein Spoiler 12 befestigt ist. Zwischen dem Spoiler 12 und dem Dach 11 ist ein Spalt oder eine Fuge 13 vorhanden. Eine dem Spoiler 12 in der Fuge 13 gegenüberliegende Wandung des Dachs 11 weist eine erste Anlagefläche 14 und eine zweite Anlagefläche 15 auf. Wie insbesondere aus Fig. 3 ersichtlich, erstreckt sich die erste Anlagefläche 14 in einer ersten Ebene l, wohingegen die zweite Anlagefläche 15 in einer zweiten Ebene II verläuft.

Die Ebenen I und II schließen einen Winkel α ein, der in der Regel zwischen 5° und 90° beträgt.

Fig. 3 läßt ferner erkennen, daß in der Fuge 13 eine Dichtung 20 angeordnet ist. Die Dichtung 20 setzt sich aus einem Dichtungsabschnitt 21, einem Übergangsabschnitt 30 und einem Befestigungsabschnitt 22 zusammen. Der Übergangsabschnitt 30 bildet einen Drehpunkt 31, der ein Schwenken des Befestigungsabschnitts 22 relativ zu dem Dichtungsabschnitt 21 ermöglicht. Der Drehpunkt 31 liegt in dem Schnittpunkt einer Geraden G₁ mit einer Geraden G₂. Die Gerade G₁ verläuft in einem Abstand a parallel zu der Ebene l, wohingegen sich die Gerade G₂ in einem Abstand b parallel zu der Ebene II erstreckt. Der Abstand a der Geraden G₁ zu der Ebene l entspricht annähernd der Hälfte der Breite B der Fuge 13. Demgegenüber ist der Abstand b der Geraden G₂ zu der Ebene II so gewählt, daß der Befestigungsabschnitt 22 bei einem Schwenken um den Drehpunkt 31 von der Ebene I in die Ebene II an der zweiten Anlagefläche 15 zu liegen kommt. Der Dichtungsabschnitt 21 dient dazu, die Fuge 13 nach außen hin abzudichten. Der Befestigungsabschnitt 22 hingegen hat den Zweck, die Dichtung 20 in der Fuge 13 an dem Dach 11 zu befestigen. Um eine zuverlässige Befestigung an den unterschiedlichen Anlageflächen 14, 15 des Dachs 11 zu gewährleisten, ist der Befestigungsabschnitt 22 relativ zu dem Dichtungsabschnitt 21 schwenkbar.

Während in Fig. 3 die Verschwenkbarkeit des Befestigungsabschnitts 22 dem Prinzip nach veranschaulicht wird, zeigen die Fig. 4A und 4B die Realisierung der Dichtung 20 in einer ersten Ausführungsform. Danach weist der Dichtungsabschnitt 21 eine Hohlkammer 23 auf, die dem Dichtungsabschnitt 21 eine zum Abdichten der Fuge 13 erforderliche Verformungsfähigkeit verleiht. Darüber hinaus weist auch der Übergangsabschnitt 30 eine Hohlkammer 32 auf, die auf der dem Dach 11 zugewandten Seite mit einer Ausnehmung 33 versehen ist. Die Ausnehmung 33 ermöglicht, daß der Befestigungsabschnitt 22 im Bereich der zweiten Anlagefläche 15 von der Ebene l, wie in Fig. 4B gezeigt, in die Ebene II, wie in Fig. 4A gezeigt, verschwenkt werden kann. Voraussetzung hierfür ist allerdings, daß an der Übergangsstelle von der ersten Anlagefläche 14 auf die zweite Anlagefläche 15 der Befestigungsabschnitt 22 beispielsweise eingeschnitten wird, so daß ein Teil des Befestigungsabschnitts 22 an der ersten Anlagefläche 14 und ein anderer Teil des Befestigungsabschnitts 22 an der zweiten Anlagefläche 15 anliegen kann.

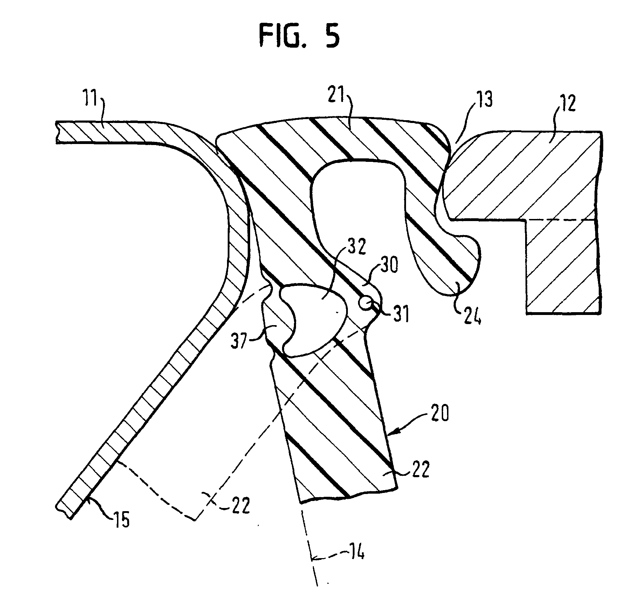

Bei der in Fig. 5 gezeigten zweiten Ausführungsform der Dichtung 20 weist der Dichtungsabschnitt 21 eine Haltelippe 24 auf, die an dem Spoiler 12 festgelegt ist. Die in dem Übergangsabschnitt 30 vorhandene Hohlkammer 32 weist der auf dem Dach 11 zugewandten Seite eine Wandung 37 auf, in die eine nicht dargestellte Abreißschnur eingebettet ist. Die Abreißschnur ermöglicht, die Wandung 37 im Bereich der zweiten Anlagefläche 15 zu entfernen, so daß sich eine Ausnehmung 33 ergibt, die - wie zuvor an Hand der Fig. 4A und 4B beschrieben - ein Schwenken des Befestigungsabschnitts 22 an die zweite Anlagefläche 15 ermöglicht.

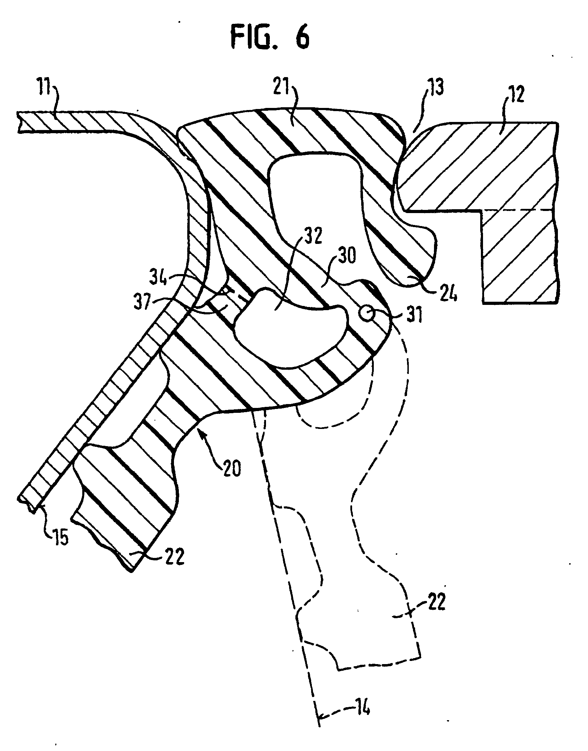

Die in Fig. 6 gezeigte dritte Ausführungsform unterscheidet sich von der Dichtung 20 gemäß Fig. 5 in erster Linie darin, daß der Befestigungsabschnitt 22 derart ausgestaltet ist, daß er in der Ausgangsstellung nicht an der ersten Anlagefläche 14 sondern an der zweiten Anlagefläche 15 anliegt. Die der zweiten Anlagefläche 15 zugewandte Wandung 37 der Hohlkammer 32 ist mit einem Einschnitt 34 versehen, der ein Schwenken des Befestigungsabschnitts 22 um den Drehpunkt 31 ermöglicht. Der Befestigungsabschnitt 22 läßt sich auf diese Weise an der ersten Anlagefläche 14 befestigen.

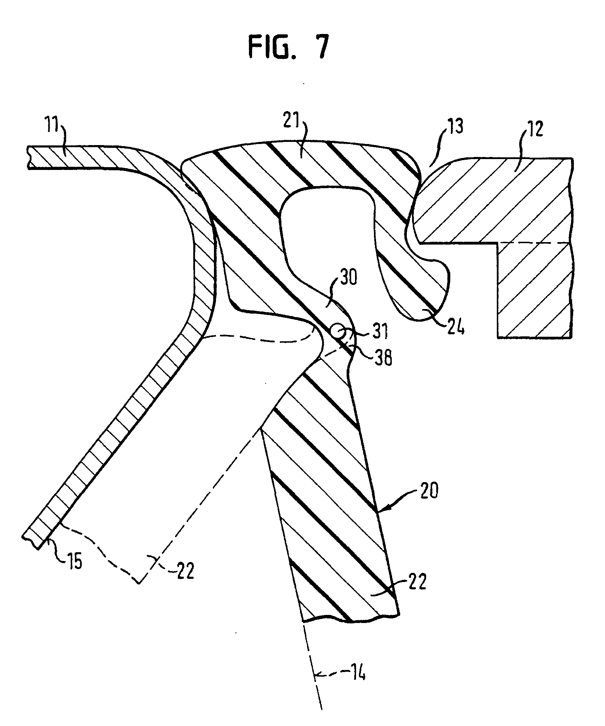

Die in Fig. 7 gezeigte vierte Ausführungsform der Dichtung 20 weist einen als Einschnürung 38 ausgebildeten Übergangsabschnitt 30 auf. Die Einschnürung 38 fungiert als Filmschanier und ermöglicht ein Schwenken des Befestigungsabschnitts 22 von der Ebene I in die Ebene II. Der Befestigungsabschnitt 22 kann demnach sowohl an der ersten Anlagefläche 14 als auch an der zweiten Anlagefläche 15 befestigt werden.

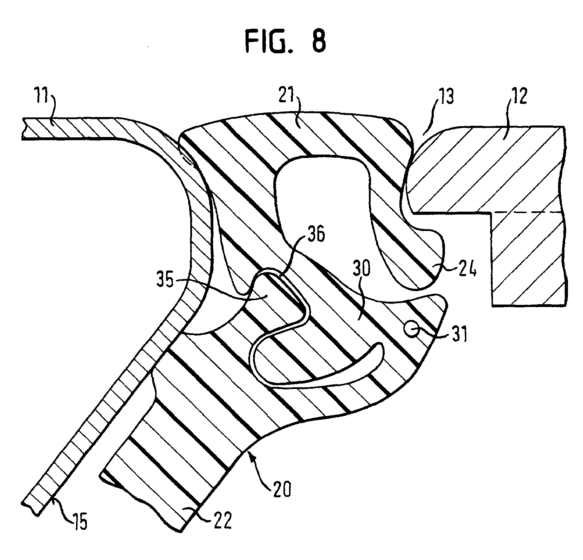

Die in Fig. 8 gezeigte fünfte Ausführungsform der Dichtung 20 weist einen Übergangsabschnitt 30 auf, der mit einem Vorsprung 35 und einer Hinterschneidung 36 versehen ist. Der Vorsprung 35 greift in der an der zweiten Anlagefläche 15 anliegenden Stellung des Befestigungsabschnitts 22 formschlüssig in die Hinterschneidung 36 ein. Auf diese Weise ergibt sich ein Formschluß zwischen dem Befestigungsabschnitt 22 und dem Übergangsabschnitt 30, der zu einer hohen Stabilität der Dichtung 20 beiträgt.

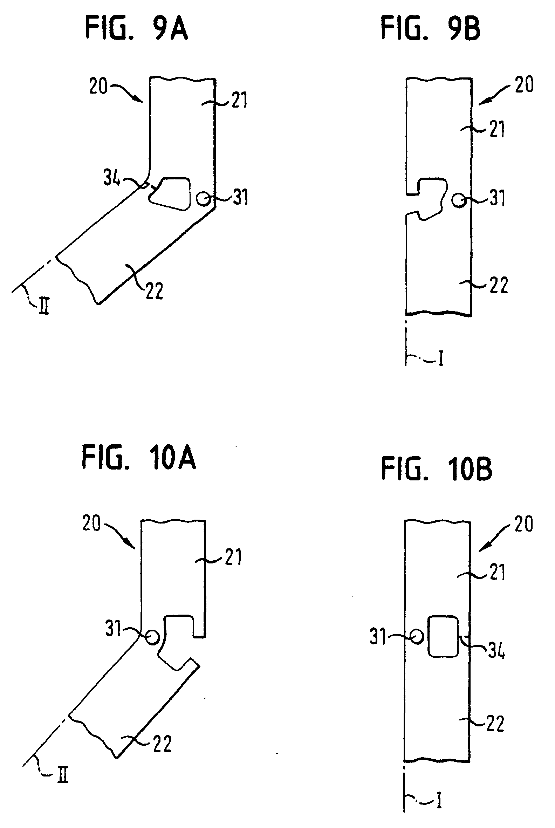

In den Fig. 9A bis 15B sind unterschiedliche Ausführungsformen der Dichtung 20 sowohl im extrudierten als auch im verschenkten Zustand abgebildet. Die Fig. 9A und 9B zeigen eine Dichtung 20, die ähnlich der in Fig. 6 gezeigten Ausführungsform ist. Fig. 9A zeigt die Dichtung 20 im extrudierten Zustand, wohingegen Fig. 9B die Dichtung 20 im von der Ebene II in die Ebene I verschwenkten Zustand veranschaulicht. Auch die Fig. 10A und 10B zeigen eine Dichtung 20, die der Ausführungsform gemäß Fig. 6 entspricht. Im Unterschied zu den Fig. 9A und 9B liegt die Dichtung 20 gemäß den Fig. 10A und 10B im extrudierten Zustand in der Ebene I und im verschwenkten Zustand in der Ebene II.

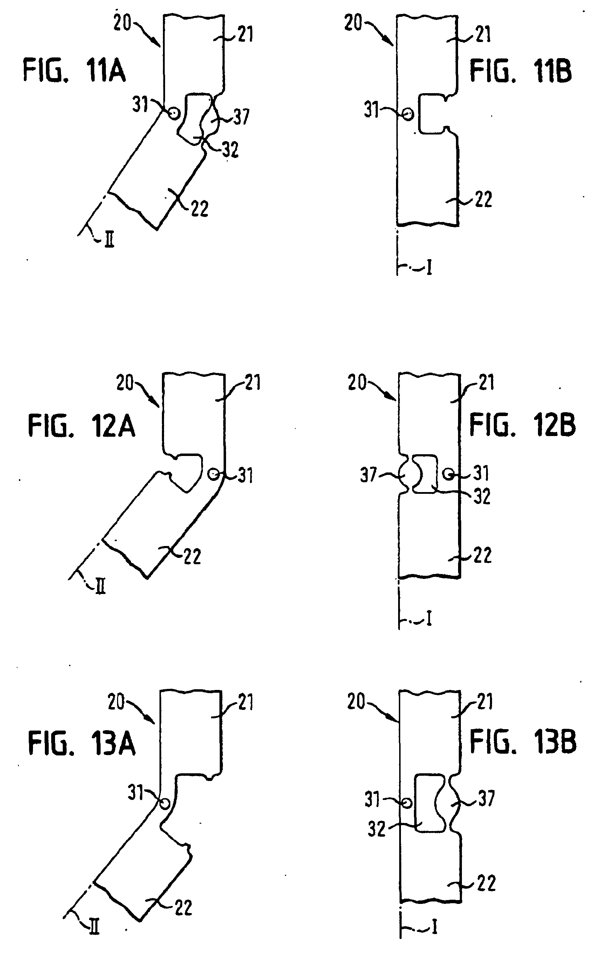

Die Fig. 11A bis 13B zeigen eine Dichtung 20, die ähnlich der Ausführungsform gemäß Fig. 5 eine dem Drehpunkt 31 im extrudierten Zustand gegenüberliegende Wandung 37 aufweist. Die Wandung 37 ist mit Einschnürungen versehen, die sich durch eine nicht dargestellte Abreißschnur entfernen lassen. Bei entfernter Wandung 37 läßt sich die Dichtung 20 um den Drehpunkt 31 schwenken. Die Fig. 11A und 11B zeigen eine Dichtung 20, die im extrudierten Zustand in der Ebene II und im verschwenkten Zustand in der Ebene l liegt. Demgegenüber veranschaulichen die Fig. 12A und 12B eine Dichtung 20, die sich im extrudierten Zustand in der Ebene I und im verschwenkten Zustand in der Ebene II befindet. Das gleiche zeigen die Fig. 13A und 13B, wobei im Unterschied zu der Ausführungsform gemäß den Fig. 12A und 12B der Drehpunkt 31 der Dichtung 20 auf der anderen Seite der Hohlkammer 32 angeordnet ist.

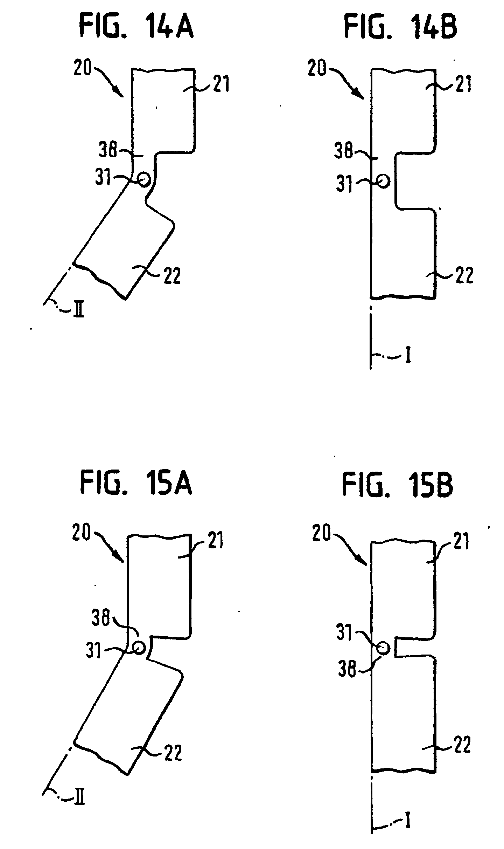

Weiterhin veranschaulichen die Fig. 14A bis 15B eine Dichtung 20, die der in Fig. 7 gezeigten Ausführungsform entspricht. In den Fig. 14A und 14B ist eine Dichtung 20 dargestellt, die im extrudierten Zustand in der Ebene II und im verschwenkten Zustand in der Ebene I liegt. Die Fig. 15A und 15B dagegen zeigen eine Dichtung 20, die sich im extrudierten Zustand in der Ebene I und im verschwenkten Zustand in der Ebene II befindet.

Den zuvor beschriebenen Ausführungsformen ist gemeinsam, daß die Dichtung 20 aus einem elastisch verformbaren Werkstoff, beispielsweise TPE oder EPDM, durch Extrusion einstückig gefertigt ist. Neben der sich auf diese Weise ergebenden kostengünstigen Fertigung zeichnet sich die Dichtung 20 durch eine einfache Montage in der Fuge 13 aus. Grund hierfür ist, daß der an dem Dach 11 beispielsweise durch Kleben befestigte Befestigungsabschnitt 22 auf Grund der schwenkbaren Anordnung an dem Übergangsabschnitt 30 von der Ebene I in die Ebene II oder umgekehrt verschwenkt werden kann, um sowohl an der ersten Anlagefläche 14 als auch an der zweiten Anlagefläche 15 eben anzuliegen. Die Dichtung 21 läßt sich somit auf einfache Weise an die auf Grund der unterschiedlichen Anlageflächen 14, 15 ungleichmäßige Fuge 13 anpassen. Nicht zuletzt trägt die oben beschriebene Dichtungsanordnung aus Dach 11, Dichtung 20 und Spoiler 12 somit der im Fahrzeugbau üblichen Massenproduktion Rechnung.

### Bezugszeichenliste

- 10: Kraftfahrzeug
- 11: Dach
- 12: Spoiler
- 13: Fuge
- 14: erste Anlagefläche
- 15: zweite Anlagefläche

- 20: Dichtung
- 21: Dichtungsabschnitt
- 22: Befestigungsabschnitt
- 23: Hohlkammer
- 24: Haltelippe

- 30: Übergangsabschnitt
- 31: Drehpunkt
- 32: Hohlkammer
- 33: Ausnehmung
- 34: Einschnitt
- 35: Vorsprung
- 36: Hinterschneidung
- 37: Wandung
- 38: Einschnürung

- B: Breite
- G₁: erste Gerade
- G₂: zweite Gerade

- a: Abstand
- b: Abstand

- I: erste Ebene
- II: zweite Ebene
- α: Winkel

## Patentansprüche

1. Dichtungsanordnung, insbesondere zum Abdichten eines Spalts oder einer Fuge an einem Kraftfahrzeug (10), mit einem ersten Bauteil (11), einem zweiten Bauteil (12) und einer einen Zwischenraum (13) zwischen dem ersten Bauteil (11) und dem zweiten Bauteil (12) abdichtenden Dichtung (20), wobei die Dichtung (20) einen Befestigungsabschnitt (22), der an dem ersten Bauteil (11) festlegbar ist, und einen Dichtungsabschnitt (21), der in dem Zwischenraum (13) angeordnet und mit dem Befestigungsabschnitt (22) durch einen Übergangsabschnitt (30) verbunden ist, aufweist und wobei der Übergangsabschnitt (30) einen Drehpunkt (31) bildet, um den der Befestigungsabschnitt (22) und der Dichtungsabschnitt (21) relativ zueinander schwenkbar sind, **dadurch gekennzeichnet, daß** das erste Bauteil (11) wenigstens eine erste Anlagefläche (14), die sich in einer ersten Ebene (l) erstreckt, und wenigstens eine zweite Anlagefläche (15), die sich in einer zweiten Ebene (II) erstreckt, aufweist, wobei die erste Ebene (I) und die zweite Ebene (II) einen Winkel (α) einschließen und wobei ein Teil des Befestigungsabschnitts (22) an der ersten Anlagefläche (14) befestigbar und ein Teil des Befestigungsabschnitts (22) zum Befestigen an der zweiten Anlagefläche (15) um den Drehpunkt (31) von der ersten Ebene (l) in die zweite Ebene (II) schwenkbar ist.

2. Dichtungsanordnung nach Anspruch 1, **dadurch gekennzeichnet, daß** der Drehpunkt (31) in dem Schnittpunkt einer ersten Geraden (G₁) mit einer zweiten Geraden (G₂) liegt, wobei die erste Gerade (G₁) parallel zu der ersten Ebene (I) und die zweite Gerade (G₂) parallel zu der zweiten Ebene (II) verläuft.

3. Dichtungsanordnung nach Anspruch 2, **dadurch gekennzeichnet, daß** die erste Gerade (G₁) in einem vorgegebenen Abstand (a) zu der ersten Ebene (I) und/oder die zweite Gerade (G₂) in einem vorgegebenen Abstand (b) zu der zweiten Ebene (II) verläuft.

4. Dichtungsanordnung nach Anspruch 3, **dadurch gekennzeichnet, daß** der Abstand (a) der ersten Geraden (G₁) zu der ersten Ebene (l) annährend die Hälfte der Breite (B) des Zwischenraums (13) beträgt.

5. Dichtungsanordnung nach einem der Ansprüche 1 bis 4, **dadurch gekennzeichnet, daß** der Übergangsabschnitt (30) als Einschnürung (38) der Dichtung (20) zwischen dem Dichtungsabschnitt (21) und dem Befestigungsabschnitt (22) ausgebildet ist.

6. Dichtungsanordnung nach einem der Ansprüche 1 bis 4, **dadurch gekennzeichnet, daß** der Übergangsabschnitt (30) eine Hohlkammer (32) aufweist, die mit einer Ausnehmung (33) oder einem Einschnitt (34) versehen ist.

7. Dichtungsanordnung nach Anspruch 6, **dadurch gekennzeichnet, daß** die Hohlkammer (32) eine Wandung (37) aufweist, die zur Bildung der Ausnehmung (33) mit einer Abreißschnur versehen ist.

8. Dichtungsanordnung nach einem der Ansprüche 1 bis 7, **dadurch gekennzeichnet, daß** der Übergangsabschnitt (30) einen Vorsprung (35) und eine Hinterschneidung (36) aufweist, wobei der Vorsprung (35) formschlüssig in der Hinterschneidung (36) festlegbar ist.

9. Dichtungsanordnung nach einem der Ansprüche 1 bis 8, **dadurch gekennzeichnet, daß** der Befestigungsabschnitt (22) durch Kleben an der ersten Anlagefläche (14) und/oder der zweiten Anlagefläche (15) befestigt ist.

10. Dichtungsanordnung nach einem der Ansprüche 1 bis 9, **dadurch gekennzeichnet, daß** die Dichtung (20) aus einem elastisch verformbaren Werkstoff, vorzugsweise einem thermoplastischen Elastomer oder Ethylen-Propylen-Dien-Kautschuk, extrudiert ist.
